# EUROPÄISCHE PATENTANMELDUNG

(11) **EP 0 595 098 A1**
(43) Veröffentlichungstag der Anmeldung: **04.05.1994**
(21) Anmeldenummer: 93116430.5
(22) Anmeldetag: 11.10.1993
(51) Int. Cl.: A01K 1/00, A01K 1/01, A01K 1/015

(54) **Stall zur Nutztierhaltung, insbesondere Schweinemast, und ein Verfahren zur Entsorgung von Tierexkrementen**

(30) Priorität: 30.10.1992 DE 4236668
(71) Anmelder: Hölscher & Leuschner GmbH & Co., D-4448 Emsbüren (DE)
(72) Erfinder: Hölscher, Werner, D-48488 Emsbüren (DE)
(74) Vertreter: Busse & Busse Patentanwälte

(57) **Zusammenfassung**

Ein Stall zur Nutztierhaltung, insbesondere Schweinemast, gemäß dem Oberbegriff des Anspruchs 1 mit einer auf dem Stallboden (9) in einer Höhe von mindestens 30 cm aufgegebenen Einstreulage (11) aus kleinteiligem kohlenstoffhaltigem Einstreumaterial wird mit einer Luftführung mit verteilten, unterseitig zur Einstreulage ausmündenden Luftöffnung oder zumindest einem Ventilator (17) oder dgl. Luftförderer im Bereich des Stallbodens (9) ausgestattet, um in der Einstreulage günstige Arbeitsbedingungen im Sinne eines selbstkompostierenden Bio-Reaktors zu schaffen. Damit wird auch ein Verfahren zur Entsorgung von Tierexkrementen mit Hilfe einer Einstreulage (11) aus kleinteiligem oder kohlenstoffhaltigem Einstreumaterial und diesem enthaltenden aeroben Bakterien bereitgestellt, bei dem die Einstreulage mit Hilfe einer unterseitigen Luftführung in vorgegebenen kurzen, eine Abkühlung der Einstreulage reduzierenden Zeitintervallen durchlüftet wird.

## Beschreibung

Die Erfindung betrifft einen Stall nach dem Oberbegriff des Anspruchs 1 und ein verfahren nach dem Oberbegriff des Anspruchs 13.

In allgemeiner Form sind Ställe dieser Art - etwa mit einer Stroh-Einstreulage traditionell bekannt. Bei diesen wurde aber meistens nur eine relativ dünne Einstreulage eingegeben, die als Lager für die Tiere ausreicht und sich möglichst leicht und schnell entfernen läßt, wenn sie mit Exkrementen durchsetzt ist.

Zwischenzeitlich hat sich bei der hier in Frage kommenden Nutztierhaltung eine einstreulose Tierhaltung durchgesetzt, bei denen die Tiere auf "nackten" Spaltenböden gehalten werden, bei denen das Ausmisten entfällt. Die in flüssiger Form anfallenden bzw. mit Wasser fortzuspülenden Exkremente sind allerdings schwer zu entsorgen mit Nachteilen für die Geruchsbelästigung der Luft und die Nitratbelastung des Bodens bei der Gülleverteilung. Da der Spaltenboden den Tieren keine Gelegenheit zur Beschäftigung bietet, sind bei dieser Art der Tierhaltung Agressionen und Kannibalismus zu berücksichtigen und die Tiere in relativ kleinen Buchten zu halten und darüberhinaus weitere Maßnahmen, etwa das Kupieren der Schwänze bei Schweinen, vorzusehen.

Vielversprechende neuere Versuche gehen demgegenüber wieder zu einer Einstreu-Tierhaltung über, die allerdings nicht als eine dünne Lage mit Zwang zum schnell wiederkehrenden Ausmisten ausgebildet wird, sondern als ausreichend dicke "Matratze", die nicht nur große Mengen an Exkrementen aufnimmt, sondern diese auch in Art eines Bio-Reaktors zersetzt. In einer ausreichend dicken Einstreulage können sich nämlich im Inneren aerobe Bakterienkulturen, anaerobe Bakterienkulturen, Pilze und dgl. entwickeln, die unter Verwertung des Kohlenstoffs im Einstreumaterial, des Stickstoffs aus Tierexkrementen und Feuchtigkeits-Wasser einen gut verwertbaren Humus bilden, und zwar bei günstigem Ablauf auch relativ schnell und ohne die Bildung der bekannten unangenehmen und schädlichen amoniakhaltigen Abluft.

Voraussetzung für einen günstigen, starken und stabilen Reaktionsverlauf sind dabei die Einhaltung von Reaktionsbedingungen wie Temperaturen in einem Bereich von etwa 35 - 55°C in der Einstreulage, ein ausreichender Feuchtigkeitsgehalt ohne Naßstellenbildung und eine gute, vergleichmäßigte Reaktion über die Einstreulagen-Tiefe. Dies alles ist mit den bisher versuchten Stallböden, die lediglich eine ausreichend dicke "Einstreu-Matratze" erhielten, schwer zu erreichen und aufrechtzuerhalten, auch wenn solcher Stallboden in kurzen Zeitabständen durchgearbeitet wird.

Bei den bisher versuchten selbstkompostierenden Stallböden sind Probleme mit einer Stabilisierung der Reaktion zu beachten und Kosten für häufiger einzugebende Starterkulturen für die Zersetzung notwendig.

Aufgabe der Erfindung ist es, einen Stall mit einer biologisch kompostierenden Einstreulage zu schaffen, der insbesondere einen stabilen und raschen Zersetzungsprozeß in einer auch bei dem hohen Kostendruck der Nutztierhaltung wirtschaftlichen Weise ermöglicht, der mit wenig Arbeitsaufwand zu betreiben ist und einen den Tieren angenehmen Stallboden ergibt.

Gemäß der Erfindung wird diese Aufgabe von einem Stall nach dem Oberbegriff des Anspruchs 1 ausgehend mit den kennzeichnenden Merkmalen des Anspruchs 1 sowie von einem Verfahren nach dem Oberbegriff des Anspruchs 13 ausgehend mit den kennzeichnenden Merkmalen des Anspruchs 13 gelöst.

Die erfindungsgemäße Lösung mit einer Zwangsbelüftung der Einstreulage hat sich als entscheidend für die Realisierung des Konzepts einer selbstkompostierenden Streulage gezeigt. Eine passende, zweckmäßigerweise gut dosierbare Durchlüftung des Stallbodens in vertikaler Richtung schafft durchgängig gute Bedingungen für die biologische Reaktion zwischen der kohlenstoffhaltigen Streulage, dem Stickstoff der flüssigen und festen Exkremente und der gleichzeitig hinzutretenden Flüssigkeit. Insbesondere wird eine vertikale Beschichtung in der Einstreulage vermieden, bei der aerobe Bakterien- und Pilzkulturen nur in einem oberen Bereich der Einstreulage mit entsprechendem Luftzutritt gedeihen - während in den unteren Bereichen nur noch anaerobe Bakterien lebensfähig sind. Eine luftabhängige Schichtung ergibt sich aber in ganz besonderem Maße, wenn Einstreulagen mit kleiner Partikelgröße, etwa Sägemehl oder feinem Strohhäcksel verwendet werden. Ein solches Material kann zwar eine relativ große Partikol-Oberfläche für die biologische Zersetzung bieten, öffnet sich aber wenig für den zwanglosen Luftzutritt von oben. Eine unzulänglich durchlüftete Einstreulage, in der in tieferen Bereichen nur noch anaerobe Bakterienkulturen- und in der biologischen exothermen Reaktionen schichtenweise unterschiedlich und vom Wärmeaufkommen unzulänglich ablaufen, schafft nicht die gewünschte rasche Zersetzung sonderen setzt auch noch in einem gewissen Maße amoniakhaltige Dämpfe frei.

Mit der vertikal durchlüfteten Einstreulage lassen sich schichtungsunabhängige Reaktionsbedinungen fördern, wie die auch durchgehend für einen starken Zersetzungsablauf benötigte Temperaturen erzielen. Damit werden optimale Arbeitsbedingungen für die gewünschten Bio-Reaktionen erreicht, die es tatsächlich ermöglichen, einen flüssige und feste Exkremente geruchsfrei absorbierenden Stallboden zu schaffen, der nicht einmal im Stallinneren Geruchsbelästigungen verbreitet und der die herkömmlich nur mit großen Problemen zu entsorgenden Exkremente in Humus und damit in gut weiterverwertbaren Stoff umwandelt.

Ein solcher Stall ist für die Tiere naturnah und erlaubt es etwa Schweinen, diesen durchzuwühlen. Damit erhalten die Tiere eine Ablenkung, die Aggressionen und Kanibalismus abbaut. Es ist nicht mehr nötig, die Schwänze von Schweinen zu kupieren, um Bißverletzungen zu vermeiden. Die Buchteneinheiten können relativ groß gewählt werden mit Vorteil eines größeren Bewegungsraums je Tier. Das Durchwühlen des Bodens ist auch keineswegs nachteilig für die gewünschte Zersetzung, zumal ein solcher Stallboden zweckmäßig von Zeit zu Zeit durchgearbeitet wird, um eine Vergleichmäßigung zwischen exkrementreicheren Schichten und kohlenstoffreicheren Schichten unten zu erzielen.

Vorzugsweise wird die Belüftung des Stallbodens in Intervallen vorgesehen, die einen ausreichenden Lufteintrag je Intervall gewährleisten, aber eine Durchkühlung des Materials vermeiden. Eine solche "Stoßbelüftung" im Intervallbetrieb ermöglicht auch eine gute Dosierung der Luft und damit der Reaktionsbedingungen. Um diese zu steuern, kann vorzugsweise zumindest ein Temperaturmeßfühler und/oder ein Gasmeßfühler vorgesehen sein, der die Reaktionen in der Einstreulage überwacht und ein Signal für einen Regler des Lufteintrags liefert.

Um die Reaktionstemperatur in der Einstreulage bei idealen Bedingungen zwischen etwa 35 und 55°C zu halten, kann diese mit einem Temperaturmeßfühler überwacht werden, der in der Einstreulage mißt. Ein Gasmeßfühler, der beispielsweise den Kohlendioxidgehalt oder Kohlenmonoxidgehalt des die Einstreulage verlassenen Gases überwacht, läßt sich in der Einstreulage, einfacher aber noch in Luftaustrittsrichtung hinter dieser anordnen. Dies gilt insbesondere dann, wenn die Luftführung an der Unterseite der Einstreulage im Saugbetrieb arbeitet, so daß ein Gasmeßfühler innerhalb der Luftführung angeordnet sein kann.

Vorzugsweise ist die Luftführung allerdings auf eine Druckluftzufuhr von unten ausgelegt, so daß den Tieren vom Boden her vorgewärmte Luft zutritt. Es versteht sich, daß die Luftführung auch umschaltbar ausgelegt sein kann, um je nach Wärme oder Kühlbedarf eine Luftzufuhr in den Stall durch die Einstreulage oder einen Luftabzug durch diese zu erzielen.

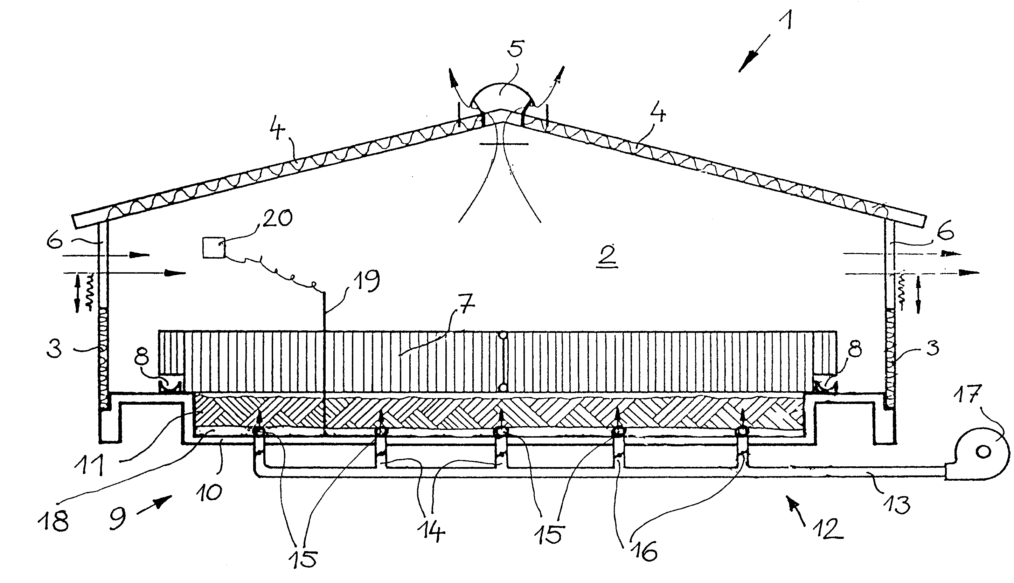

Ein Ausführungsbeispiel der Erfindung ist in der Zeichnung dargestellt und wird nachfolgend näher beschrieben. Die einzige Figur in der Zeichnung zeigt einen Schweinemaststall in schematisierter Form. Der in der Zeichnung dargestellte, insgesamt mit 1 bezeichnete Stall bietet einen Stallraum 2, der durch Wände 3 und Dachflächen 4 umschlossen ist, die mit einer effektiven Isolierung versehen sind. Eine Belüftung und ggfs. Kühlung des Stalls ist durch klappengeregelte Dachfirstenlüfter 5 und - für eine Querlüftung auf gegenüberliegenden Seiten angeordneten - jalousiegeregelten Wandlüftern 6 vorgesehen. Innen ist der Grundriß des Stalls durch Buchtengitter 7 großflächig in mit Futtertrögen ausgestattete Buchten unterteilt.

Ein insgesamt mit 9 bezeichneter Stallboden baut auf einer im ganzen schalenförmig festen Stahlbeton-Bodenplatte 10 auf, über der eine Einstreulage 11 aus Holzspänen in einer Höhe von etwa 70 cm ausgebreitet ist. Die Holzspäne sind ein guter Kohlenstofflieferant, der bei Beaufschlagung der Einstreulage 11 mit flüssigen und festen Exkrementen ein für die gewünschten biologischen Reaktionen in der Einstreulage günstiges Verhältnis zwischen Kohlenstoff und Stickstoff von etwa 500 : 1 bietet. Es können selbstverständlich auch andere geeignete und möglichst natürliche Streumaterialien verwendet werden, die für die Zersetzung von Tierausscheidungen Kohlenstoff liefern können. So stellt Stroh, das zweckmäßig in fein zerkleinerter Form für eine große Oberfläche und eine gute Durcharbeitbarkeit der Einstreulage vorliegt, ein Kohlenstoff/Stickstoff-Verhältnis von etwa 70 : 1 dar. Um solche Verhältnisse in der Einstreulage 11 möglichst über die gesamte Höhe aufrechtzuerhalten, wird diese von Zeit zu Zeit durchgearbeitet, allerdings bewirken Schweine eine Durcharbeitung auch schon durch eigenes Wühlen im Boden.

Eine Einstreulage dieser Art bildet Bakterienkulturen und Pilzkulturen aus, die eine Zersetzung der Exkremente wie auch des Einstreumaterials schaffen und die als Zersetzungsprodukt einen Humus liefern, der - anders als die problematische Gülle der bisherigen Tierhaltung auf Spaltenböden - keine Entsorgungsprobleme bietet sondern sogar gut verwertbar ist. Auch eine Geruchsbelästigung durch die bisherige Entwicklung von amoniakhaltigen Gasen wird durch Absorption und Zersetzung unterbunden. Nicht einmal innerhalb des Stalles sind nennenswerte Geruchsbelästigungen festzustellen.

Ein solcher biologischer Reaktor arbeitet allerdings je nach Betriebsbedingungen sehr unterschiedlich. Ungünstige Arbeitstemperaturen, unzureichende Verteilungen der zusammenzubringenden Reaktionsmaterialien, durchnäßte Bereiche oder eine starke luftabhängige Schichtung der Bakterienkulturen können dazu führen, daß nur eine Oberflächenschicht mit aeroben Bakterien wirksam arbeiten kann, während tiefer nur noch anaerobe Bakterien existieren können. Dies führt zu langsamen Reaktionen mit einer geringen Eigentemperaturentwicklung. Weiterhin bilden sich Bakterienstämme unzureichend neu oder sterben ab, so daß teure Starterkulturen einzubringen sind.

Um eine gute Durchsetzung der Einstreulage 11 mit aeroben Bakterien zu ermöglichen, weist der Stall 1 eine insgesamt mit 12 bezeichnete Luftführung 12 in Form eines Kanalsystems aus einem Hauptrohr 13 und Zweigrohren 14, 15 mit Drosselklappen 16 auf, die von einem Ventilator 17 mit Druckluft versorgt werden. Die Drosselklappen 16 ermöglichen eine bereichsweise Regulierung. Die Rohre 15 verlaufen zwischen der Bodenplatte 10 und der Streulage 11 horizontal und parallel zueinander in einer Sand- oder Kiesschicht 18, die einerseits eine poröse Schicht für eine großflächige horizontale Luftverteilung sorgt, andererseits eine fest Auflage für die Streulage 11 und einen Schutz der Rohre 15 beim Durcharbeiten der Streulage 11 bietet. In den Rohren 15 sind (nicht dargestellte) Luftaustritts-Löcher oder -Schlitze vorgesehen.

Der Ventilator 17 wird so gesteuert, daß er in Intervallen arbeitet. In Abständen von etwa 30 min. eingeschaltet, drückt er beispielsweise über ein Einschaltintervall von etwa 5 min. Luft von unten in die Einstreulage 11, um insbesondere die aeroben Bakterienstämme mit Sauerstoff zu versorgen, aber auch Feuchtdampf herauszudrücken und das Material in einem gewissen Maße zu lockern. Die Intervallsteuerung hat gegenüber einer gleichförmigen Luftzufuhr insbesondere den Vorteil, daß ein kurzer Luft-Austausch das Material nicht durchkühlt.

Zweckmäßig ist eine Regulierung der Belüftung zur Optimierung des Zersetzungsprozesses vorgesehen. Hier dient ein Temperatur-Meßfühler 19 in einer Ist-Wert-Erfassung anhand der Temperatur innerhalb der Streulage 11. Das Meßsignal wird an einen Regler 20 weitergegeben, der die Einschaltdauer des Ventilators 17 steuert.

## Patentansprüche

1. Stall zur Nutztierhaltung, insbesondere Schweinemast, mit einer auf dem Stallboden in einer Höhe von mindestens 30 cm aufgegebenen Einstreulage aus kleinteiligem, kohlenstoffhaltigen Einstreumaterial, **dadurch gekennzeichnet,** daß der Stallboden (9) eine Luftführung (12) mit verteilten, an der Unterseite der Einstreulage ausmündenden Luftöffnungen und zumindest einem Ventilator (17) oder dergleichen Luftförderer aufweist.

2. Stall nach Anspruch 1, gekennzeichnet durch zumindest einen Meßfühler (19) für den Zustand der Einstreulage (11), der an einen dem Luftförderer (17) vorgeschalteten Regler (20) angeschlossen ist.

3. Stall nach Anspruch 2, dadurch gekennzeichnet, daß der Meßfühler ein Temperaturfühler (19) ist.

4. Stall nach Anspruch 3, dadurch gekennzeichnet, daß der Meßfühler (19) in die Einstreulage (11) eingreift.

5. Stall nach Anspruch 2, dadurch gekennzeichnet, daß der Meßfühler ein Gasmeßfühler ist.

6. Stall nach Anspruch 5, dadurch gekennzeichnet, daß der Gasmeßfühler eine Überwachung auf ein Kohlenoxid ausführt.

7. Stall nach Anspruch 5 oder 6, dadurch gekennzeichnet, daß die im Stallboden (9) angeordnete Luftführung (12) mit Unterdruck beaufschlagt ist und daß der Gasmeßfühler in der Luftführung (12) angeordnet ist.

8. Stall nach einem der Ansprüche 2 bis 7, dadurch gekennzeichnet, daß der Regler (20) mit einer Zeitsteuerung für einen Intervallbetrieb ausgestattet ist.

9. Stall nach einem der Ansprüche 1 bis 8, dadurch gekennzeichnet, daß die Luftführung (12) aus einem Luftkanalsystem besteht.

10. Stall nach Anspruch 9, dadurch gekennzeichnet, daß das Luftkanalsystem ein verzweigtes System mit mehreren Kanalzweigen ist, von denen zumindest ein Kanalzweig über eine Drossel (16) regulierbar ist.

11. Stall nach Anspruch 8, 9 oder 10, dadurch gekennzeichnet, daß die Luftöffnungen der Luftführung (12) in einer hochporösen Zwischenlage ausmünden.

12. Stall nach Anspruch 11, dadurch gekennzeichnet, daß die Zwischenlage aus einem mineralischen Schüttmaterial besteht.

13. Verfahren zur Entsorgung von Tierexkrementen bei der Nutztierhaltung, insbesondere Schweinemast, mit Hilfe einer Einstreulage aus kleinteiligem, kohlenstoffhaltigem Einstreumaterial und in diesem enthaltenen aeroben Bakterien, dadurch gekennzeichnet, daß die Einstreulage mit Hilfe einer an der Unterseite der Einstreulage ausmündenden Luftführung in vorgegebenen kurzen, eine Abkühlung der Einstreulage reduzierenden Zeitintervallen durchlüftet wird.
